# FASCICULE DE BREVET EUROPEEN

(11) **EP 2 934 809 B1**
(45) Date de publication et mention de la délivrance du brevet: **11.11.2020**
(21) Numéro de dépôt: 13818449.4
(22) Date de dépôt: 06.12.2013
(51) Int. Cl.: B23K 23/00, E01B 11/52

(54) **PROCÉDÉ ET MOULE POUR LE SOUDAGE DES EXTRÉMITÉS DE DEUX PORTIONS DE RAIL**
VERFAHREN ZUM VERSCHWEISSEN VON SCHIENENENDEN UND FORM DAFÜR
METHOD OF WELDING THE EXTREMITIES OF RAILS AND MOULD THEREFOR

(30) Priorité: 21.12.2012 FR 1262725
(43) Date de publication de la demande: 28.10.2015
(73) Titulaire: SNCF RESEAU, 93418 La Plaine Saint-Denis CEDEX (FR)
(72) Inventeur: LORIEUX, Arnaud, F-95320 St Leu La Foret (FR); MONNET, Claude, F-71600 Paray-le-monial (FR); DETAIN, Serge, F-37110 Auzouer En Touraine (FR); DELOLMO, Rémy, F-83500 La Seyne Sur Mer (FR)
(74) Mandataire: Argyma
(86) Numéro de dépôt international: PCT/IB2013/060702
(87) Numéro de publication internationale: WO 2014/097043

(56) Documents cités:
- WO-A1-2012/049282

## Description

### DOMAINE DE L'INVENTION

L'invention concerne le domaine de la maintenance de voies ferrées et plus particulièrement le soudage des extrémités de deux portions de rail longitudinales disposés bout-à-bout.

L'invention se rapporte à un procédé et à un moule pour le soudage des extrémités de deux portions de rail longitudinales, notamment ferroviaire, disposées bout-à-bout ainsi qu'à un ensemble formé de deux portions de rail et d'une soudure.

### ÉTAT DE LA TECHNIQUE

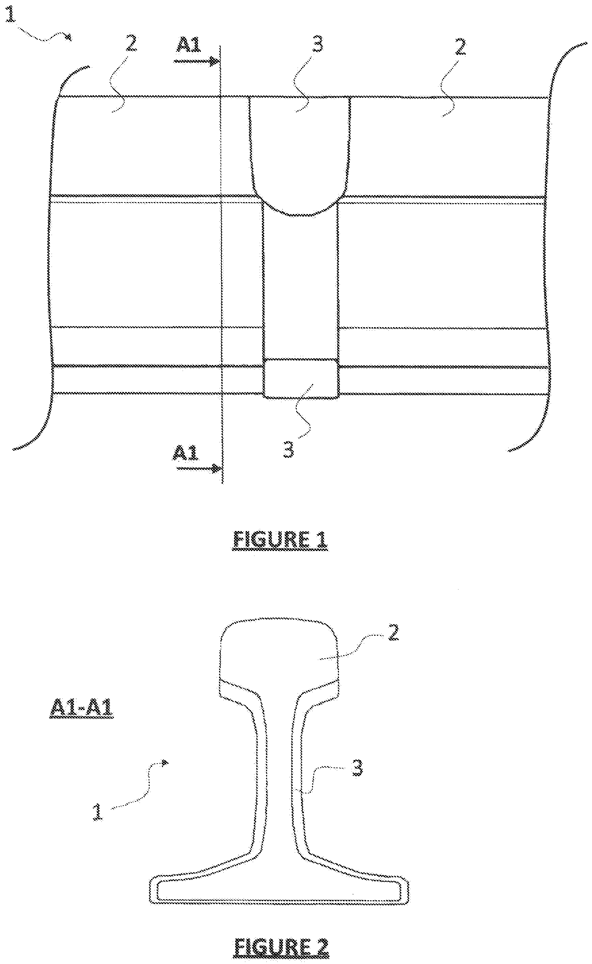

Lors de la maintenance d'une voie ferrée, il est connu de souder par aluminothermie les extrémités de deux portions de rail métalliques longitudinales disposées bout-à-bout sur la voie. Pour ce faire, les extrémités des deux portions de rail sont d'abord disposées en regard l'une de l'autre en ménageant un espace de liaison (ou espace intercalaire) entre elles. Un moule est ensuite mis en place autour de l'espace, ainsi ménagé, et des extrémités des portions de rail, ainsi disposées, puis un métal liquide est coulé dans le moule de manière à remplir l'espace de soudage entre les deux portions de rail. La soudure est enfin obtenue par solidification du métal lors de son refroidissement. Les figures 1 et 2 illustrent un ensemble 1 formé de deux portions de rail 2 solidarisées par une soudure 3.

Cependant, lors de la solidification, les efforts de traction dans le métal entraînent la soudure vers le bas, la soudure entraînant alors à son tour les deux portions de rail vers le bas. Un tel affaissement de l'ensemble formé par les portions de rail et par la soudure peut créer un problème de géométrie qui peut être repéré ultérieurement par un opérateur de surveillance et qui nécessitera une intervention. Dans certains cas, ce problème de géométrie peut ne pas être détecté par l'opérateur de surveillance et présenter alors un danger pour un véhicule circulant sur les rails.

Une solution existante consiste à soulever les deux portions de rail, par exemple d'au moins 1 mm pour 1 m de longueur de rail, de manière à les positionner en cône ou pointe avant de procéder à la mise en place du moule de soudage. Un tel positionnement permet d'éviter, par compensation, que les efforts de traction dans le métal ne créent un affaissement de l'ensemble formé par les abouts de rail et la soudure lorsque la soudure s'affaisse.

Un tel levage nécessite toutefois un outillage spécifique qui nécessite du temps à installer, ce qui présente un inconvénient. De plus, un tel levage est réalisé de manière différente d'une maintenance à une autre, par exemple lorsque l'opérateur de maintenance n'est pas le même ou bien lorsque l'outillage n'est pas positionné exactement de la même manière ou bien encore lorsque le type de rail ou le type de traverses sont différents. Dans ce cas, l'agencement géométrique final de la soudure et des portions de rail est différent d'une soudure à une autre, ce qui présente un inconvénient. De plus, lorsque le levage des portions de rail est trop important, le cône formé par les portions de rail prend la forme d'un tremplin pouvant soulever un véhicule circulant sur les rails, notamment à grande vitesse, ce qui, d'une part, peut impacter la géométrie de la voie et, d'autre part, peut devenir dangereux lorsque des trains circulant sur la voie notamment à grande vitesse, provoquent des dommages sur les rails, ce qui présente donc aussi un inconvénient.

Par ailleurs, afin de supprimer la partie de la soudure s'élevant au-dessus des portions de rail, une première étape de meulage de la soudure et des portions de rail, dite de parachèvement brut de meulage, est nécessaire pour dégrossir la soudure avant son refroidissement complet de sorte à rendre l'ensemble suffisamment plan pour permettre le passage d'un véhicule sur les rails.

Cependant, comme les efforts de traction dans le métal, lors de sa solidification, entrainent la soudure et les portions de rail vers le bas, il est nécessaire d'attendre le refroidissement complet de la soudure et d'effectuer un passage avec un véhicule sur les rails pour aplanir les portions de rail mises en cône avant de procéder à une deuxième étape de meulage, dite de finition, afin d'obtenir la planéité requise pour l'exploitation de la voie. Un opérateur est donc contraint de revenir ultérieurement, généralement le lendemain, pour réaliser l'étape de meulage de finition, ce qui présente un autre inconvénient.

Enfin, un levage trop important des portions de rail peut nécessiter un meulage trop important des portions de rail qui peut entrainer une altération de la géométrie des rails non-conforme aux valeurs de tolérance requises pour la circulation d'un véhicule sur les rails, par exemple 0,2 mm d'écart de hauteur sur 1 m de rail pour un train à grande vitesse, ce qui présente aussi un inconvénient.

On connaît dans l'art antérieur la demande de brevet WO2012/049282 qui enseigne un moule de soudage selon le préambule de la revendication 1.

### EXPOSÉ DE L'INVENTION

L'invention vise à améliorer les procédés existants de soudage des extrémités de deux portions de rail longitudinales afin notamment de simplifier la maintenance des rails d'une voie ferrée et d'en réduire le temps et le coût.

Par ailleurs, bien que l'invention ait été réalisée dans le domaine de la maintenance ou du renouvellement de portions de rail ferroviaires, elle trouve son application dans toute maintenance ou renouvellement de portions de rail dont le soudage est réalisé par aluminothermie ou tout procédé similaire.

L'invention concerne un moule de soudage selon la revendication 1.

Le volume de soudage est ainsi configuré de sorte que la masse d'un métal liquide coulé dans ledit volume de soudage soit plus importante dans la moitié inférieure du volume de soudage que dans sa moitié supérieure.

Selon l'invention, le volume de soudage est au moins en partie évasé, c'est-à-dire élargi, au moins évasé au niveau de sa moitié inférieure, par rapport à sa moitié supérieure, de sorte à recevoir une masse de métal liquide de soudure plus importante que celle reçue par la moitié supérieure. Par « évasé », on entend ici que la largeur du volume augmente du haut vers le bas.

Selon l'invention encore, l'augmentation de l'évasement du volume, de haut en bas, est progressive, de préférence selon une direction à la fois parallèle et/ou perpendiculaire à l'axe longitudinal des portions de rails. Par le terme « progressive », on entend que l'augmentation de l'évasement du volume ne varie pas abruptement. Le contour externe du volume peut ainsi être, par exemple, au moins en partie concave.

Selon un mode préféré de l'invention, la moitié inférieure du volume de soudage comprend au moins une portion de section sensiblement tronconique.

De préférence, ladite portion est un tronc de pyramide.

Selon une autre caractéristique préférée de l'invention, le moule de soudage est réalisé en sable réfractaire.

L'invention a aussi pour objet un procédé de soudage selon la revendication 4.

Par le terme « bout-à-bout », on entend qu'une extrémité de la première portion de rail est disposée en regard de l'extrémité de la seconde portion de rail en ménageant un espace entre les deux, c'est-à-dire sans que les deux extrémités ne se touchent.

Par les termes « moitié inférieure », on entend la portion du volume situé en-dessous du plan horizontal traversant le volume sensiblement à la moitié de sa hauteur. Par les termes « moitié supérieure », on entend la portion du volume situé au-dessus du plan horizontal traversant le volume sensiblement à la moitié de sa hauteur.

La masse de métal se répartit ainsi progressivement, lors de l'étape de coulage, de telle sorte à obtenir une masse de métal plus importante dans la partie inférieure du moule que dans sa partie supérieure.

Ainsi, étant donné que les efforts de traction dans le métal sont plus importants dans la partie inférieure du moule, là où le volume de métal est le plus important, que dans sa partie supérieure, le retrait du métal coulé se fait donc globalement en direction de ladite partie supérieure, ce qui provoque une élévation de la soudure lors de son refroidissement.

Les portions de rails peuvent ainsi être disposées bout-à-bout dans le prolongement l'une de l'autre sans qu'il soit nécessaire de les soulever, ce qui permet de réduire ainsi le temps et les coûts de maintenance et d'améliorer la répétabilité des opérations.

De plus, l'absence de levage des portions de rail permet d'éviter la création d'un effet tremplin sur la voie qui est donc davantage sécurisée.

En outre, comme il n'est plus nécessaire de soulever les portions de rail, il n'y a plus d'écart de levage d'une maintenance à une autre, ce qui permet d'obtenir des soudures de qualité géométrique constante.

Afin de parfaire la mise en regard des extrémités des deux portions de rail, l'étape de disposition des deux portions de rail peut être avantageusement réalisée en utilisant un dispositif d'alignement.

De préférence, le soudage est réalisé par aluminothermie.

Selon un aspect de l'invention, le procédé comprend une étape de préchauffage du moule de soudage et des extrémités des deux portions de rails de manière à faciliter et améliorer le soudage des deux portions de rail.

De manière avantageuse, le procédé comprend une étape de mise en place d'un creuset dans lequel est disposé le métal à couler.

Selon un aspect de l'invention, le procédé comprend, postérieurement à l'étape de coulage, une étape de retrait du moule de soudage.

De préférence, le procédé comprend, postérieurement à l'étape de coulage, une étape de meulage limitée à la soudure, plus particulièrement limitée à la portion de la soudure s'étendant au-dessus des portions de rail suite à l'élévation du métal de soudure entre les deux portions de rail lors de sa solidification.

Ainsi, avec le procédé selon l'invention, seule la soudure est meulée et il n'est donc plus nécessaire de meuler aussi les portions de rail, ce qui permet d'éviter d'altérer la géométrie du rail en surface et d'effectuer l'étape de meulage rapidement.

En outre, il n'est plus nécessaire d'attendre le refroidissement complet de la soudure avant de réaliser l'étape de meulage de finition car il n'y a plus de risque d'affaissement au niveau de la soudure. Le meulage peut ainsi être réalisé en une unique étape, ce qui permet d'éviter à un opérateur de revenir ultérieurement et d'éviter une perte de temps et de réduire ainsi les coûts. Selon une caractéristique de l'invention, le matériau de soudure est un matériau métallique, par exemple de l'acier.

D'autres caractéristiques et avantages de l'invention apparaîtront lors de la description qui suit faite en regard des figures annexées données à titre d'exemples non limitatifs et dans lesquelles des références identiques sont données à des objets semblables :
- la figure 1 est une vue partielle de profil d'un ensemble formé de deux portions de rail solidarisées entre elles par une soudure de l'art antérieur ;
- la figure 2 est une vue selon la coupe Al-Al de l'ensemble de la figure 1 ;
- la figure 3 est une vue partielle de profil d'un ensemble formé de deux portions de rail solidarisées entre elles par une soudure effectuée selon l'invention ;
- la figure 4 est une vue selon la coupe A2-A2 de l'ensemble de la figure 3 ;
- la figure 5 est une vue en perspective de l'ensemble de la figure 3 ;
- la figure 6 illustre partiellement le profil d'une forme de réalisation du moule de soudage selon l'invention.

### DESCRIPTION DETAILLEE

### Système et moule de soudage selon l'invention

La construction ou la maintenance d'une voie ferrée nécessite le soudage de portions de rail entre elles au niveau de leurs extrémités.

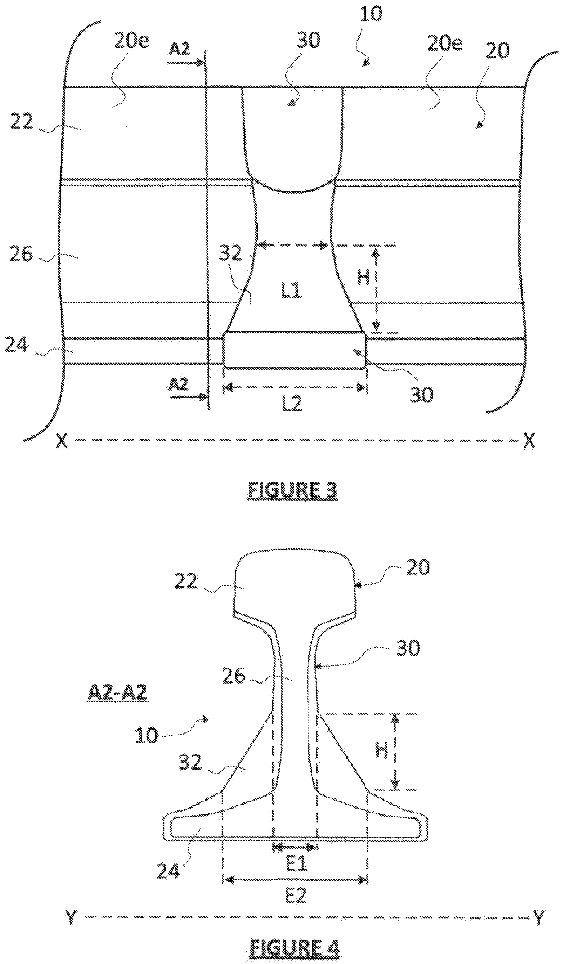

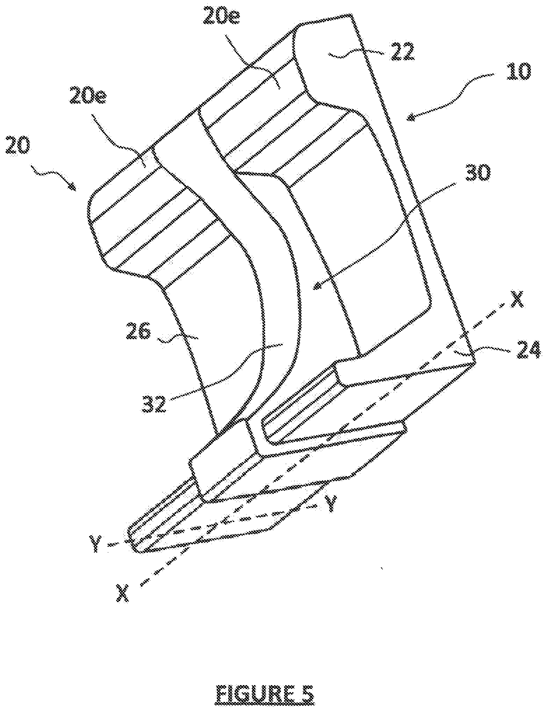

On a représenté partiellement aux figures 3 à 5 un ensemble 10 formé de deux portions de rails 20 solidarisées par une soudure 30 au niveau de leurs extrémités 20e.

### Système et moule de soudage selon l'invention

La construction ou la maintenance d'une voie ferrée nécessite le soudage de portions de rail entre elles au niveau de leurs extrémités.

On a représenté partiellement aux figures 3 à 5 un ensemble 10 formé de deux portions de rails 20 solidarisées par une soudure 30 au niveau de leurs extrémités 20e.

Chaque portion de rail 20 comprend une partie supérieure en forme de champignon 22 et une base 24 s'étendant selon un axe YY perpendiculaire à l'axe longitudinal XX des portions de rail 20. La partie supérieure 22 et la base 24 étant reliés par une surface 26 de plus faible épaisseur.

Comme illustré par la figure 3, la soudure 30 comprend un bourrelet 32 se présentant sous la forme d'un tronc de pyramide.

La longueur L1 de la petite base (ou base supérieure) du tronc de pyramide 32 s'étendant selon l'axe longitudinal XX des portions de rails est comprise entre 45 mm et 55 mm, de préférence environ égale à 50 mm.

La longueur L2 de la grande base (ou base inférieure) du tronc de pyramide 32 s'étendant selon l'axe longitudinal XX des portions de rails est comprise entre 65 mm et 75 mm, de préférence environ égale à 70 mm.

La longueur El représente la longueur de la petite base du tronc de pyramide 32 s'étendant selon l'axe YY perpendiculaire à l'axe XX.

La longueur E2 représente la longueur de la grande base du tronc de pyramide 32 s'étendant selon l'axe YY perpendiculaire à l'axe XX.

La soudure 32 de solidarisation de l'ensemble 10 est obtenue par coulage de métal liquide dans un moule comme décrit ci-après.

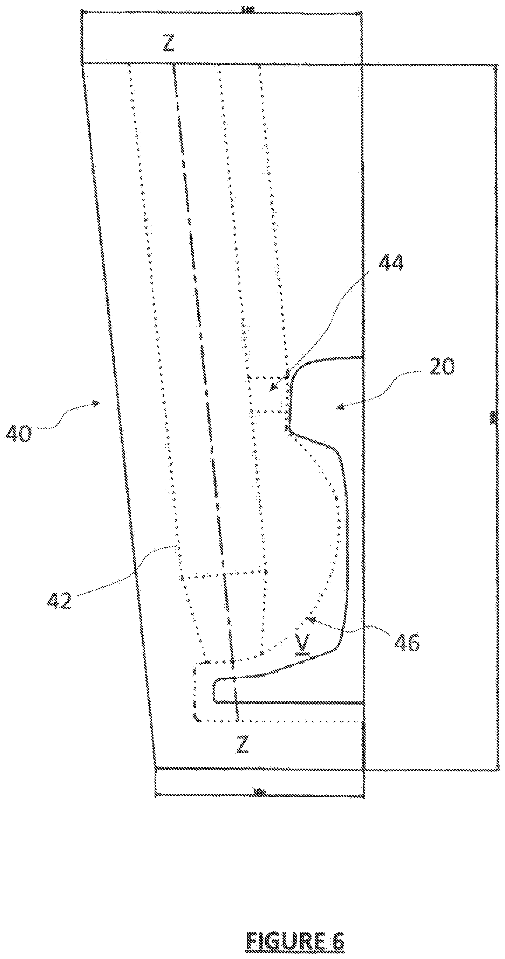

La figure 6 illustre un moule de soudage 40 selon l'invention disposé autour de deux portions de rail 20 avant coulage du métal de soudure dans le moule 40.

Le moule de soudage 40 comprend un évent 42 s'étendant sensiblement verticalement selon la direction ZZ de manière à autoriser la coulée du métal de soudure par gravité jusqu'au volume de soudage V définissant les contours de la soudure entre les deux portions de rail 20.

Un passage 44 permet aussi la coulée du métal de soudure au niveau du champignon 22 de la portion de rails 20 de sorte à remplir entièrement le volume de soudage V.

Enfin, le moule de soudage 40 comprend un contour incurvé 46 autorisant l'évasement du volume de soudure dans sa moitié inférieure de sorte à recevoir une plus grande quantité de métal de soudure et permettre ainsi audit métal de ne pas affaisser les portions de rail 20 lors de son refroidissement.

### Mise en œuvre de l'invention

Afin de souder les deux portions longitudinales de rail 20, on dispose tout d'abord bout-à-bout les deux portions longitudinales de rail 20 à souder de sorte à ménager un espace de liaison (non représenté) entre leurs extrémités 20e.

Un banc dispositif d'alignement peut être utilisé pour permettre la mise en regard des deux extrémités 20e de portions de rails 20. L'alignement consiste à mettre les deux portions ou abouts de rail 20 bout-à-bout de telle sorte que les surfaces de la partie supérieure 22 des portions de rails 20 s'inscrivent dans un même plan sensiblement horizontal et que leurs surfaces latérales orientées vers l'intérieur de la voie s'inscrivent dans un plan sensiblement vertical, les deux plans étant perpendiculaires entre eux.

Le moule de soudage 40 définissant le volume de soudage V entre les deux portions de rail est ensuite mis en place autour dudit espace de liaison.

Un dispositif de préchauffage du moule de soudage et des extrémités 20e des deux portions de rail 20 est alors installé de manière à faciliter et améliorer le soudage des deux portions de rail 20 Le préchauffage peut être un préchauffage par air induit, par oxygène-propane, par air-essence ou tout autre type de préchauffage connu pour permettre un tel soudage.

Un creuset, dans lequel est disposée une charge aluminothermique comprenant le métal à couler, est placé au-dessus de la soudure.

La charge est allumée de sorte qu'une réaction aluminothermique se produise et que le métal liquide de soudure coule alors du creuset par gravité dans le volume de soudage.

Une fois coulé, la masse de métal liquide est alors, selon l'invention, plus importante dans la moitié inférieure du volume de soudage que dans sa moitié supérieure.

Le moule est alors retiré pour permettre le refroidissement du métal coulé qui va alors se solidifier de sorte à former la soudure solidarisant les deux portions de rail.

La forme conférée à la soudure par le moule selon l'invention va permettre, par effet de traction dans le métal, de faire remonter la soudure.

La portion de la soudure s'étendant au-dessus des portions de rail peut ainsi être meulée avant le refroidissement complet de la soudure.

Il est aussi présenté un ensemble formé de deux portions de rail longitudinales disposées consécutivement et d'une soudure dont une partie est disposée entre les deux portions de rail, remarquable en ce que la largeur de la soudure est plus importante au niveau de sa base que de sa partie médiane. Par les termes « largeur de la soudure », on entend la dimension de la soudure selon l'axe longitudinal des rails.

De préférence, la soudure comprend un bourrelet. Un tel bourrelet est créé par la masse de métal liquide plus importante coulée dans la moitié inférieure du volume de soudage et permet de diriger les retassures dans les évents, c'est-à-dire dans les conduits du moule, lors de la solidification du métal. Ce bourrelet est l'un des éléments qui permet de garantir la santé interne de la soudure.

De manière avantageuse, le bourrelet s'étend sur la majeure partie de la hauteur de la soudure.

Le bourrelet est avantageusement évasé dans sa partie inférieure.

De manière préférée, le bourrelet comprend au moins une portion en tronc de pyramide.

Les dimensions de la petite base d'un tel tronc de pyramide sont avantageusement comprises entre 45 mm et 55 mm et les dimensions de sa grande base comprises entre 65 mm et 75 mm.

## Revendications

1. Moule de soudage de deux portions de rail (20) longitudinales agencé pour être disposé sur lesdites portions de rail (20) et définissant un volume de soudage (V) configuré, d'une part, pour recevoir un métal liquide de soudure et, d'autre part, de sorte que l'espace défini par le volume de soudage (V) dans sa moitié inférieure soit plus important que l'espace défini par la volume de soudage (V) dans sa partie supérieure, moule de soudage **caractérisé par le fait que** le volume de soudage (V) est évasé au moins au niveau de sa moitié inférieure de manière progressive selon une direction à la fois parallèle et perpendiculaire à l'axe longitudinal des portions de rails de sorte à former une soudure (30) dont largeur est plus importante au niveau de sa base que de sa partie médiane.

2. Moule selon la revendication 1, dans lequel la moitié inférieure du volume de soudage (V) comprend au moins une portion de section sensiblement tronconique.

3. Moule selon la revendication 2, dans lequel ladite portion est un tronc de pyramide.

4. Procédé de soudage de deux portions longitudinales de rail (20) comprenant :
- une étape de disposition bout-à-bout des deux portions longitudinales de rail (20) à souder de sorte à ménager un espace de liaison entre leurs extrémités (20e),
- une étape de mise en place d'un moule de soudage (40) selon l'une des revendications 1 à 3 autour dudit espace de liaison, ledit moule (40) définissant un volume de soudage (V) entre les deux portions de rail (20),
- une étape de coulage d'un métal liquide de soudure dans ledit volume de soudage (V) de manière à ce que la masse de métal liquide coulé soit plus importante dans la moitié inférieure du volume de soudage (V) que dans sa moitié supérieure,
- une étape de solidification du métal coulé de sorte à souder les deux portions de rail (20).

5. Procédé selon la revendication 4, ledit procédé comprenant, postérieurement à l'étape de coulage, une étape de meulage limitée à la portion de la soudure s'étendant au-dessus des portions de rail (20) suite à l'élévation de l'ensemble (10) comprenant les deux portions de rail (20) et la soudure (30).

6. Procédé selon l'une des revendications 4 et 5, ledit procédé comprenant une unique étape de meulage.

## Patentansprüche

1. Form zum Verschweißen von zwei länglichen Schienenabschnitten (20), die eingerichtet ist, um auf den Schienenabschnitten (20) angeordnet zu sein, und die ein Schweißvolumen (V) festlegt, das ausgelegt ist, um zum einen ein flüssiges Schweißmetall aufzunehmen und zum anderen derart, dass der von dem Schweißvolumen (V) in seiner unteren Hälfte festgelegte Raum größer ist als der von dem Schweißvolumen (V) in seinem oberen Teil festgelegte Raum, wobei die Form zum Verschweißen **dadurch gekennzeichnet ist, dass** das Schweißvolumen (V) mindestens im Bereich seiner unteren Hälfte zunehmend gemäß einer Richtung sowohl parallel als auch senkrecht zur Längsachse der Schienenabschnitte erweitert ist, so dass eine Schweißnaht (39) gebildet wird, deren Breite im Bereich ihrer Basis größer als in ihrem Mittelteil ist.

2. Form nach Anspruch 1, wobei die untere Hälfte des Schweißvolumens (V) mindestens einen Abschnitt mit einem etwa kegelstumpfförmigen Querschnitt umfasst.

3. Form nach Anspruch 2, wobei der Abschnitt ein Pyramidenstumpf ist.

4. Verfahren zum Verschweißen von zwei länglichen Schienenabschnitten (20), umfassend:
- einen Schritt des aneinandergefügten Anordnens der zwei zu verschweißenden länglichen Schienenabschnitte (20) derart, dass ein Verbindungsraum zwischen deren Enden (20e) ausgebildet wird,
- einen Schritt des Platzierens einer Form zum Verschweißen (40) nach einem der Ansprüche 1 bis 3 um den Verbindungsraum, wobei die Form (40) ein Schweißvolumen (V) zwischen den zwei Schienenabschnitten (20) festlegt,
- einen Schritt des Gießens eines flüssigen Schweißmetalls in das Schweißvolumen (V) derart, dass die gegossene Flüssigmetallmasse größer in der unteren Hälfte des Schweißvolumens (V) als in seiner oberen Hälfte ist,
- einen Schritt des Verfestigens des gegossenen Metalls derart, dass die zwei Schienenabschnitte (20) verschweißt werden.

5. Verfahren nach Anspruch 4, wobei das Verfahren nach dem Schritt des Gießens einen Schritt des Schleifens umfasst, der auf den Abschnitt der Schweißnaht begrenzt ist, der sich oberhalb der Schienenabschnitte (20) infolge der Erhöhung der Gesamtheit (10) erstreckt, die die zwei Schienenabschnitte (20) und die Schweißnaht (30) umfasst.

6. Verfahren nach einem der Ansprüche 4 und 5, wobei das Verfahren einen einzigen Schleifschritt umfasst.

## Claims

1. A mould for welding two longitudinal portions of rail (20) arranged to be disposed on said portions of rail (20) and defining a welding volume (V) configured, on the one hand, to receive a liquid welding metal and, on the other hand, so that the space defined by the welding volume (V) in its lower half is greater than the space defined by the welding volume (V) in its upper part, the welding mould being **characterised in that** the welding volume (V) is gradually flared at least at its lower half along a direction both parallel and perpendicular to the longitudinal axis of the portions of rails so as to form a weld (30) the width of which is greater at its base than at its median part.

2. The mould according to claim 1, wherein the lower half of the welding volume (V) comprises at least one substantially frustoconical cross-section portion.

3. The mould according to claim 2, wherein said portion is a frustum of a pyramid.

4. A method for welding two longitudinal portions of rail (20) comprising:
- a step of disposing end-to-end both longitudinal portions of rail (20) to be welded so as to provide a connecting space between their ends (20e),
- a step of placing a welding mould (40) according to one of claims 1 to 3 around said connecting space, said mould (40) defining a welding volume (V) between both portions of rail (20),
- a step of casting a liquid welding metal into said welding volume (V) so that the cast liquid metal mass is greater in the lower half of the welding volume (V) than in its upper half,
- a step of solidifying a cast metal so as to weld both portions of rail (20).

5. The method according to claim 4, said method comprising, subsequently to the casting step, a step of grinding limited to the portion of the weld extending above the portions of rail (20) following the raising of the assembly (10) comprising both portions of rail (20) and the weld (30).

6. The method according to one of claims 4 to 5, said method comprising a single grinding step.
